# EUROPÄISCHE PATENTSCHRIFT

(11) **EP 4 033 156 B1**
(45) Veröffentlichungstag und Bekanntmachung des Hinweises auf die Patenterteilung: **07.06.2023**
(21) Anmeldenummer: 21204688.2
(22) Anmeldetag: 26.10.2021
(51) Int. Cl.: F24C 15/00

(54) **GARGERÄT MIT HALTEPLATTE FÜR EINE GARGERÄTELEUCHTE**
COOKING APPLIANCE WITH HOLDING PLATE FOR A COOKING APPLIANCE LIGHT
APPAREIL DE CUISSON POURVU DE PLAQUE DE MAINTIEN POUR UN LUMINAIRE D'APPAREIL DE CUISSON

(30) Priorität: 26.01.2021 DE 102021101699
(43) Veröffentlichungstag der Anmeldung: 27.07.2022
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Welslau, Frank, 59757 Arnsberg (DE)
(74) Vertreter: Ostriga Sonnet Wirths & Vorwerk

(56) Entgegenhaltungen:
- WO-A1-2013/098018
- CN-A- 106 871 019
- DE-A1-102014 203 532
- DE-U1-202019 106 169
- DE-U1-202019 106 170
- US-A- 3 334 215

## Beschreibung

Die Erfindung betrifft ein Gargerät,
- mit einem Garraum, der von einer Garraumwandung umgeben ist,
- mit einem Durchbruch in der Garraumwandung, die der Aufnahme einer Gargeräteleuchte dient,
- mit einer Gargeräteleuchte, die in dem Durchbruch einsitzt und der Ausleuchtung des Garraumes dient.

Gargeräte sind aus dem Stand der Technik in Form von Backöfen, Dampfgarern, Mikrowellen oder sonstigen Geräten für den Privathaushalt oder gewerbliche Anwendungszwecke hinlänglich bekannt. Sie dienen der Zubereitung von Speisen und weisen hierfür einen Garraum auf, der von der sogenannten Muffel und ihren Wänden, also den Muffelwänden bzw. Garraumwänden gebildet ist.

Um den Garvorgang beobachten und begutachten zu können, verfügen Gargeräte über eine Beleuchtung wie sie beispielsweise in der anmeldereigenen EP 1 811 227 A1 beschrieben ist. Solche Leuchten sitzen in Durchbrüchen der Garraumwandung ein, die bei der Fertigung der Muffel in die Garraumwand eingebracht werden.

Die Muffel ist ein in der Regel mehrteiliges, aus Metall gefertigtes Bauteil. Dabei werden die Muffelteile in Pressen aus Metallblechen geformt.

Die Werkzeuge und Anlagen zum Herstellen der Muffelteile sind sehr kostspielig, so dass Hersteller von Gargeräten bemüht sind, die Werkzeuge ausreichend auszulasten und verschiedene Gerätetypen und Gerätemodelle unter Nutzung der gleichen Muffel herzustellen.

Die Fortentwicklung der Beleuchtungstechnik führt zu einem vermehrten Einsatz von auf LED-Modulen basierender Gargeräteleuchten, die ein hohes Energieeinsparpotential bieten und damit die Energieeffizienz von Gargeräten verbessern.

So zeigt die WO2013/098018 A1 beispielsweise einen Ofen, bei dem ein Lichtleitstab eines LED Moduls von außen in die Ofenmuffel eingeführt wird. Genutzt wird hier die Einführöffnung und Haltevorrichtung für die Heizschlangen, die ebenfalls von außen angeschlossen werden. Der Lichtleitstab wird zwischen den Heizstäben montiert. Eine Halteplatte dient dabei der Beabstandung und Befestigung der Heizstäbe und des Lichtleitstabs.

Eine Einführvorrichtung und Halterung für einen Lichtleiter über ein Anbauteil in Form einer Mikrowellenfalle für ein Mikrowellengargerät zeigt die DE 10 2014 203 532 A1.

Spezifische Anforderungen der LED-Lichttechnik führen zu vollkommen neuen Gargeräteleuchten, die abweichende Bauformen, Einbaumaße und Anordnungserfordernisse im Gargerät haben. Insbesondere die Temperaturempfindlichkeit der LED-Lichtquelle führt dazu, dass diese in einer erheblich größeren Entfernung vom Garraum angeordnet werden muss und das emittierte Licht häufig durch einen Lichtleiter in den Garraum eingespeist wird. Dies hat zur Folge, dass für den Einsatz von auf LED-Technik basierenden Gargeräteleuchten Ofenmuffeln mit angepassten Wandöffnungen zum Einspeisen von Licht in den Garraum entwickelt werden und bestehende Produktionswerkzeuge anzupassen oder zu ersetzen sind. Dies ist sowohl in wirtschaftlicher Hinsicht als auch unter Nachhaltigkeitsgesichtspunkten nachteilig.

Aufgabe der Erfindung ist es deshalb, ein Gargerät mit einem für die Nutzung herkömmlicher Leuchten ausgestalteten Durchbruch in der Gargerätewandung mit einer auf LED-Technik basierenden Gargeräteleuchte zu auszurüsten.

Gelöst wird die Aufgabe der Erfindung von einer Gargeräteleuchte mit den Merkmalen des Anspruchs 1, insbesondere mit den kennzeichnenden Merkmalen, wonach
- die Gargeräteleuchte einen Befestigungssockel aufweist, mittels dessen die Gargeräteleuchte in der Halteplatte verankert ist, wobei
- ein Elastikelement zwischen dem Befestigungssockel und der Halteplatte angeordnet ist, welches dichtend wirkt.

Dabei weist der Durchbruch in der Garraumwandung ein erstes Öffnungsmaß auf, die Aufnahmeöffnung der Halteplatte weist hingegen ein zweites Öffnungsmaß auf, welches gegenüber dem ersten Öffnungsmaß verringert ist.

Die Erfindung zeichnet sich insbesondere durch die wie oben definierte Halteplatte aus, welche die durch den Durchbruch in der Garraumwandung definierte Befestigungskontur und Befestigungslage für die Verwendung eines LED-Leuchtmittels adaptiert. Auf diese Weise ist weder eine Anpassung der Garraumwandung als Teil der Muffel an moderne, LED basierte Gargeräteleuchten erforderlich, noch muss Aufwand betrieben werden, um im Hinblick auf die Vorteilhaftigkeit der LED-Technik entwickelte Gargeräteleuchte umzukonstruieren, um diese an bestehende, für herkömmliche Leuchte angepasste Gargerätewandungen anzupassen.

Die erfindungsgemäße Halteplatte erlaubt es also auf bestehender, herkömmlicher Technik beruhende Bauteile und für die Herstellung solcher Bauteile vorgesehene Produktionswerkzeuge weiterzuwenden, bis aufgrund beispielsweise von Werkzeugverschleiß eine Werkzeugneuanschaffung erforderlich und damit auch eine Werkzeugänderung möglich ist. Gleichzeitig können bereits an neue Anforderungen angepasste Leuchtmittel ohne Konstruktionsänderung weiterverwendet werden. Die Halteplatte erlaubt somit eine bruchlose Transition, also einen sanften Übergang von althergebrachter Technik zu neuer Technik.

Vorgesehen ist zudem, dass die Gargeräteleuchte einen Befestigungssockel aufweist, mittels dessen die Gargeräteleuchte in der Halteplatte verankert ist.

Um das Austreten von Wrasen durch den Durchbruch in der Garraumwandung zu verhindern ist vorgesehen, dass ein Elastikelement zwischen dem Befestigungssockel und der Halteplatte angeordnet ist, welches dichtend wirkt.

Häufig weisen die Durchbrüche in der Garraumwandung Nuten auf. Bei herkömmlichen Leuchtmitteln dienen diese in der Regel dazu, die Lampenfassung verdrehsicher zu halten, um für den Fall des Austausches des Leuchtmittels eine Glasabdeckung relativ zu einem Fassungsgehäuse drehen und dann entfernen zu können. Die Erfindung schlägt vor, diese Nut als Positioniernut zu nutzen und so eine definierte Ausrichtung der Halteplatte sicherzustellen. Hierzu bildet die Halteplatte eine Positioniernase aus, die in die Positioniernut eingreift.

Bei einer bevorzugten Ausführungsform ist vorgesehen, dass die Halteplatte, insbesondere die Positioniernase der Halteplatte, wenigstens eine die Garraumwandung hintergreifende Rastnase aufweist, insbesondere, wenn die Halteplatte wenigstens einen die Garraumwandung hintergreifenden Haltefuß aufweist.

Auf diese Weise ist gewährleistet, dass die Halteplatte einfach in den vorhandenen Durchbruch der Garraumwandung eingesetzt werden kann und dort sicher gehalten ist.

Eine alternative Ausführungsform der Erfindung sieht vor, dass die Halteplatte sowohl eine Positioniernase ausbildet, die in eine Positioniernut des Durchbruchs eingreift, die Positioniernase dabei eine die Garraumwandung hintergreifende Rastnase ausbildet und die Halteplatte ein Dichtelement mit einer Aufnahme für den Lichtleitstab der Gargeräteleuchte aufweist und die Halteplatte wenigstens einen die Garraumwandung hintergreifenden Haltefuß aufweist. Dieses Dichtelement verhindert das Austreten von Wrasen aus dem Garraum, dient jedoch sogleich der Halterung der Garraumleuchte.

Weiterhin ist vorgesehen, dass die Halteplatte eine Ausrichtkontur für eine lagegerechte Halterung der Gargeräteleuchte in der Halteplatte aufweist. Hierdurch ist sichergestellt, dass durch ein Zusammenspiel mit Positioniernut und Positioniernase die LED basierte Gargeräteleuchte lagegerecht in der Garraumwand angeordnet wird. Dies ist eine wesentliche Voraussetzung, um das in den Garraum eingespeiste Lichte durch beispielsweise die Beschichtung von Lichtleitern definiert in den Garraum abzustrahlen.

Fertigungstechnisch ist es von Vorteil, wenn die Halteplatte ein Stanz-/Biegeteil ist, bei welcher der Haltefuß und die Positioniernase aus dem Material der Halteplatte ausgeklinkt sind.

Konkret ist vorgesehen, dass die Halteplatte ringförmig ist und zwei Haltefüße und eine Positioniernase aufweist, wobei die Haltefüße und die Positioniernase jeweils um etwa 120 Grad umfangsversetzt sind.

Weitere Vorteile der Erfindung sowie ein besseres Verständnis derselben ergibt sich aus der nachfolgenden Beschreibung zweier Ausführungsbeispiele. Es zeigen:
- Fig. 1: eine erste Ausführungsform der erfindungsgemäßen Gargeräteleuchte in Explosionsansicht,
- Fig. 2: eine Aufsicht auf die Gargeräteleuchte der Fig. 1,
- Fig. 3: eine Schnittdarstellung gemäß Schnittlinie III-III in Fig. 2,
- Fig. 4: eine Halteplatte in perspektivischer Ansicht auf die Oberseite,
- Fig. 5: die Halteplatte gemäß Fig. 4 in perspektivischer Ansicht auf ihre Unterseite,
- Fig. 6: eine zweite Ausführungsform der Erfindung,
- Fig. 7: eine Ansicht von oben auf die Ausführungsform gemäß Fig. 6,
- Fig. 8: eine Schnittdarstellung gemäß Schnittlinie VIII-VIII in Fig. 7,
- Fig. 9: eine Halteplatte der zweite Ausführungsform in Ansicht von oben,
- Fig. 10: die Halteplatte gemäß Fig. 9 in Ansicht von unten,
- Fig. 11: perspektivische Ansicht der in Fig. 1 gezeigten Befestigungsspange,
- Fig. 12: eine Schnittdarstellung gemäß Schnittlinie XII-XII in Fig. 2 und

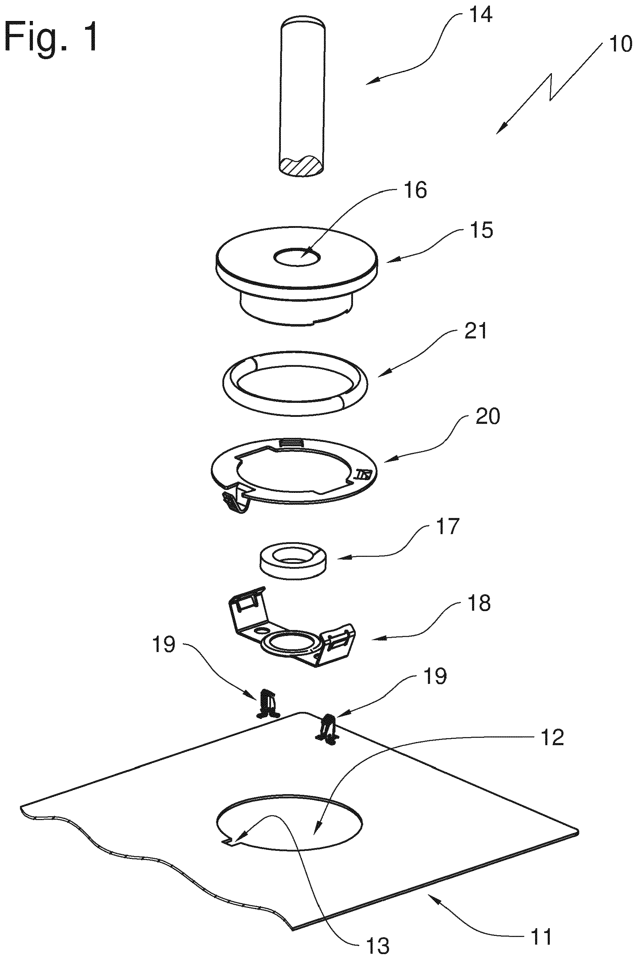

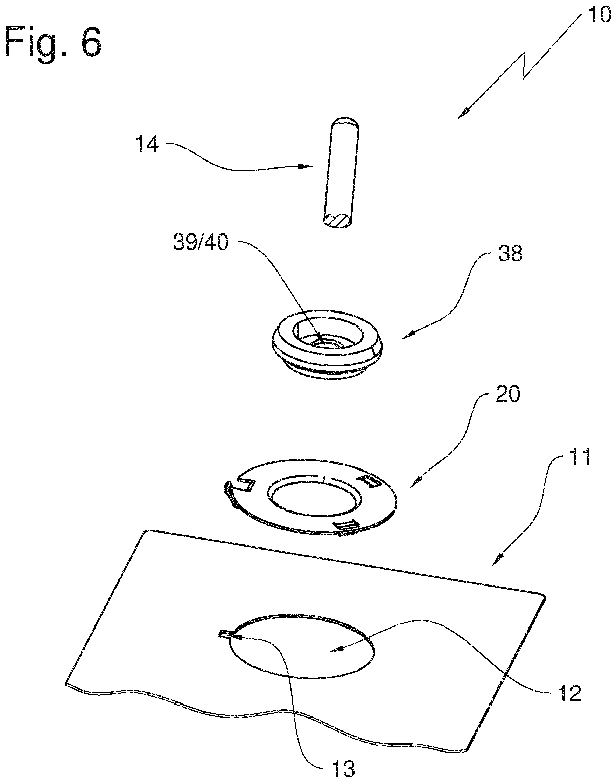

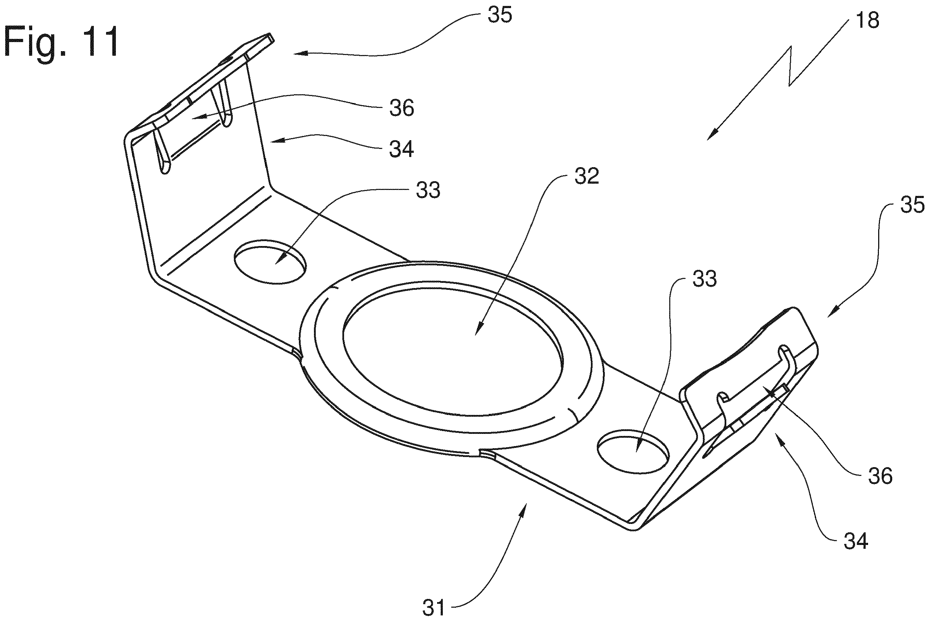

In den Figuren ist die Anordnung einer Gargeräteleuchte in einem Garraumwandabschnitt insgesamt mit der Bezugsziffer 10 bezeichnet und in den Figuren 1 bis 5 in einer ersten Ausführungsform und den Figuren 6 bis 10 in einer zweiten Ausführungsform gezeigt. Die Figuren 11 bis 13 zeigen weitere Bauteile der ersten bzw. zweiten Ausführungsform der Erfindung. Dargestellt sind lediglich für die Anordnung wesentlichen Komponenten. Auf eine vollständige Darstellung des Gargerätes und der Gargeräteleuchte wurde verzichtet.

Figur 1 zeigt zunächst die Anordnung 10 mit einem Teilabschnitt einer Garraumwandung 11 eines Garraumes eines nicht weiter dargestellten Gargerätes. Die Garraumwandung 11 verfügt über einen Durchbruch 12, der im Wesentlichen kreisförmig ist und eine Positioniernut 13 ausbildet.

Von der Gargeräteleuchte ist in Figur 1 lediglich der Lichtleitstab 14 gezeigt. Auf eine Darstellung des Licht in den Lichtleitstab 14 einspeisenden LED-Moduls mit Halterung, Kühlkörper, etc. wurde verzichtet.

Ein Befestigungssockel 15 verfügt über eine Bohrung 16, welche den Befestigungssockel 15 durchsetzt und der Aufnahme des Lichtleitstabs 14 dient. Der Befestigungssockel 15 trägt einen Graphitring 17, mittels dessen eine Abdichtung gegenüber dem Lichtleichtstab 14 realisiert wird und welcher mit einer Befestigungsspange 18 am Befestigungssockel 15 gehalten ist. Die Befestigungsspange 18 ihrerseits wird von Haltestiften 19 am Befestigungssockel 15 festgelegt.

Eine Halteplatte 20 nimmt den Befestigungssockel 15 unter Zwischenlage eines dichtenden Elastikelementes 21 auf, um diesen im Durchbruch 12 der Garraumwandung 11 zu halten.

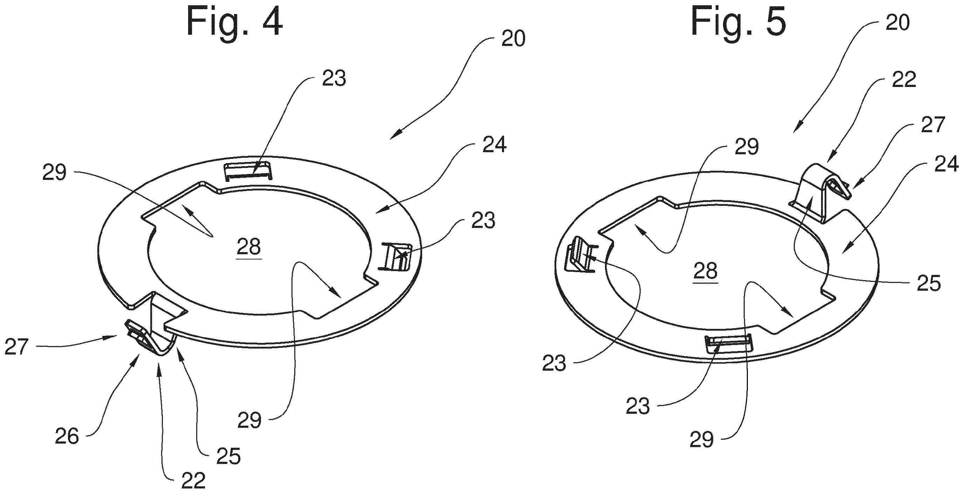

Die Halteplatte 20 ist in perspektivischer Ansicht von oben in Figur 4 und perspektivischer Ansicht von unten in Figur 5 gezeigt. Die Halteplatte 20 ist ringförmig. Ihr Durchmesser übersteigt den Durchmesser des Durchbruchs 12 der Garraumwandung 11, um diesen abdecken zu können.

Die Halteplatte 20 ist mit einer Positioniernase 22 versehen und bildet zwei Haltefüße 23 aus, die im Ausführungsbeispiel gemäß den Figuren 4 und 5 aus der Ringwand 24 der Halteplatte 20 richtungsgleich - dort zur Unterseite der Halteplatte 20 - ausgeklinkt sind.

Die Positioniernase 22 ist etwa v-förmig gestaltet, wobei sich ein an der Halteplatte 20 angebundener Ursprungsschenkel 25 bezogen auf die Halteplatte 20 nach unten streckt und an seinem tiefsten Punkt über einen Verbindungsbogen in einen Positionierschenkel 26 übergeht. Der Positionierschenkel 26 selbst ist in Richtung Oberseite der Halteplatte 20 gerichtet, wobei sich sein freies Ende wenigstens bis in die Ebene der Ringwand 24 der Halteplatte 20 erstreckt, diese jedoch auch nach oben hin durchstoßen kann.

Der Positionierschenkel 26 trägt darüber hinaus eine radial nach außen ausgeklinkte Rastnase 27, die der Befestigung durch Untergreifen der Garraumwandung 11 dient.

Die Ringwand 24 der Halteplatte 20 bildet einen Ringraum 28, in welchem der Befestigungssockel 15 aufgenommen wird. Der Ringraum 28 ist demnach die Aufnahmeöffnung der Halteplatte 20. Zudem geht der Ringraum 28 bei der vorliegenden ersten Ausführungsform an zwei sich diametral gegenüberliegenden Abschnitten in jeweils eine Ausrichtkontur 29 über. Diese ist formkongruent mit noch zu beschreibenden Ausrichtmitteln 30 des Befestigungssockels 15 und erlauben so eine lagedefinierte Anordnung desselben in der Halteplatte 20.

Der Ursprung der Haltefüße 23 wie auch der Ursprung des Ursprungsschenkels 25, also die jeweilige Wurzel, mit welcher die Haltefüße 23 bzw. Positioniernase 22 an der Ringwand 24 der Halteplatte 20 angebunden sind, liegen auf einem gemeinsamen Radius. Dieser ist gegenüber dem Radius des Durchbruchs 12 der Garraumwandung 11 geringfügig vermindert, so dass die Wurzel der Haltefüße 23 sowie die Wurzel des Ursprungsschenkels 25 innerhalb des Durchbruchs 12 einsitzen können. Die freien Enden der Haltefüße 23 liegen jedoch auf einem entsprechend größeren Radius, so dass sie die Garraumwandung 11 auf einer der Halteplatte 20 gegenüberliegenden Seite hinter- bzw. untergreifen können.

Figur 11 zeigt die Befestigungsspange 18 noch einmal in Einzeldarstellung. Die Befestigungsspange 18 verfügt zunächst über einen Basisriegel 31, welcher eine zentrale Durchtrittsöffnung 32 für den Lichtleitstab 14 sowie rechts und links von der Durchtrittsöffnung 32 jeweils eine Haltestiftöffnung 33 aufweist.

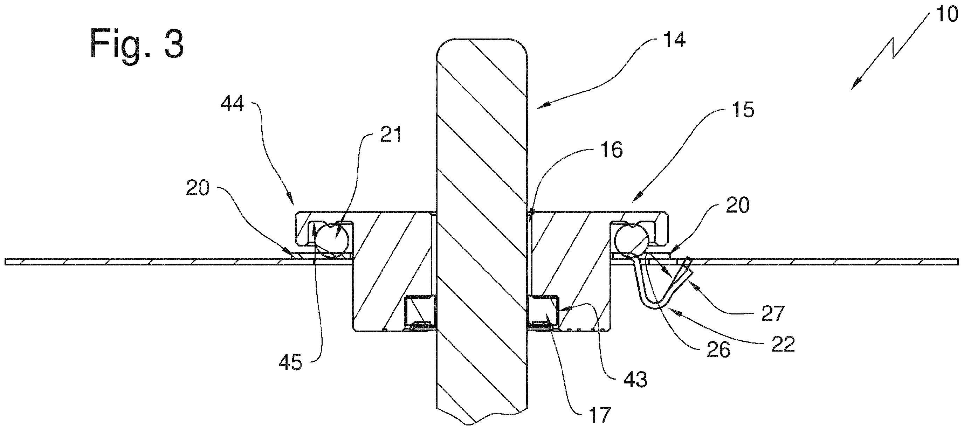

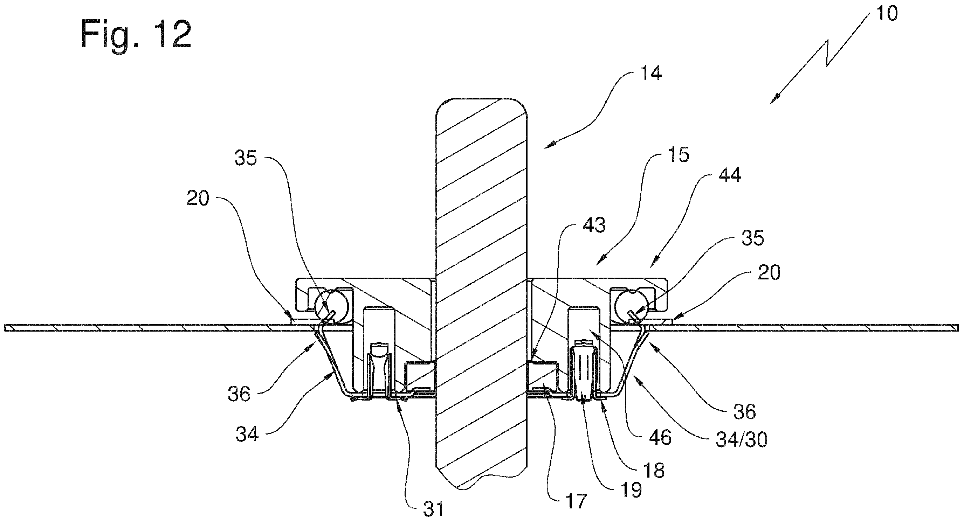

Der Basisriegel 31 dient zunächst dazu, den Graphitring 17 in einer in Figur 3 und 12 dargestellten Haltekammer 43 des Befestigungssockels 15 zu fixieren. Gleichzeitig trägt er an seinen beiden gegenüberliegenden Enden jedoch jeweils ein Rastbein 34, welches - ausgehend von ihrem am Basisriegel 31 befindlichen Ursprung - trichterförmig ausgestellt sind. Jedes Rastbein 34 ist in seinem freien Ende der Ausstellrichtung entgegengesetzt umgeformt. Diese umgeformten Enden bilden jeweils einen Zentrier- und Rastabschnitt 35. Unmittelbar vor der den Übergang zum Zentrier- und Rastabschnitt 35 definierenden Umformlinie ist aus jedem Rastbein 34 ein rückstellelastischer Fixierfuß 36 nach außen ausgestellt, dessen freies Ende etwa auf der Höhe der Umformlinie des jeweiligen Fixierfußes 36 liegt.

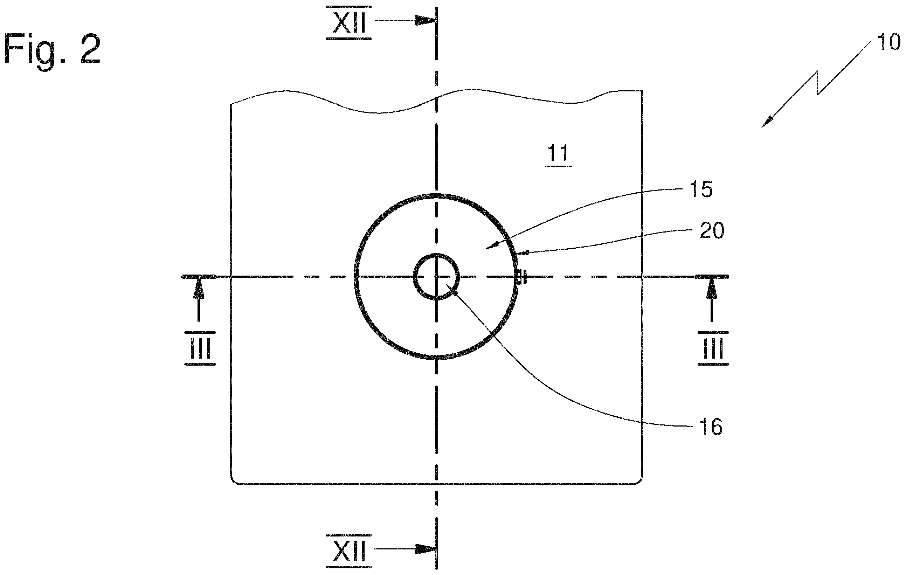

Die Figuren 3 und 12 zeigen die Anordnung 10 gemäß Figur 1 in montiertem Zustand entsprechend der Schnittlinien III-III bzw. XII-II in Figur 2. Beiden Figuren zeigen zunächst die den Lichtstab 14 aufnehmende Bohrung 16 des Befestigungssockels 15 sowie die vom Befestigungssockel 15 ausgebildete Haltekammer 43 für den Graphitring 17, welcher die Bohrung 16 gegenüber dem Lichtleitstab 14 dichtet und so den Austritt von Kochdünsten durch die Bohrung 16 hindurch verhindert.

Der Befestigungssockel 15 bildet einen Dichtkragen 44 aus, der eine in Richtung Halteplatte 20 offene Dichtnut 45 ausbildet, in welcher das dichtende Elastikelement 21 angeordnet ist und den Austritt von Wrasen durch den Ringraum 28 hindurch, am Befestigungssockel 15 vorbei verhindert.

Figur 3 zeigt zudem, wie die Halteplatte 20 im Durchbruch 12 der Garraumwandung 11 einsitzt, wobei die Positioniernase 22 in der Positioniernut 13 einliegt. Das freie Ende des Positionierschenkels 26 liegt in der Ebene der Garraumwandung, die Rastnase 27 untergreift die Garraumwandung 11 und sichert so die Halteplatte 20 gemeinsam mit den nicht sichtbaren Haltefüßen an der Garraumwandung 11.

Anhand der Figur 12 lässt sich nunmehr die weitere Funktion der Befestigungsspange 18 beschreiben. Die Befestigungsspange 18 ist mittels der Haltestifte 19, welche die Haltestiftöffnungen 33 durchstoßen und in Sacklöcher 46 des Befestigungssockels 15 eingreifen, am Befestigungssockel 15 gesichert und hält zunächst den Graphitring 17 in der Haltekammer 43.

Die trichterförmig aufgestellten, von der Bohrung 16 des Befestigungssockels 15 wegweisenden Rastbeine 34 sitzen in den Ausrichtkonturen 29 der Halteplatte 20 ein, wobei die Halteplatte 20 zwischen dem Zentrier- und Rastabschnitt 35 eines jeden Rastbeines 34 und dem Dichtkragen 44 des Befestigungssockels 15 gehalten ist. Die Rastbeine 34 dienen so als Ausrichtmittel 30 des Befestigungssockels 15.

Der Umformbereich, durch welchen der jeweilige Zentrier- und Rastabschnitt 35 eines jeden Rastbeins 34 gebildet ist, kragt gegenüber dem die jeweilige Ausrichtkontur 29 bildenden Innenrand der Halteplatte 20 aus und dient somit als ein die Halteplatte 20 hintergreifender Rastvorsprung. Die Schrägflächen den Zentrier- und Rastabschnitts 35 richten die Halteplatte 20 bei auftretenden Fertigungstoleranzen zum Befestigungssockel 15 aus. Jeder Fixierfuß 36 dient als die Halteplatte 20 am Befestigungssockel 15 haltende Auszugssicherung und können, eine entsprechende Ausstellung vorausgesetzt, zusätzlich die Garraumwandung 11 hintergreifen und so ergänzend zu den Haltefüßen 23 und der Rastnase 27 des Positionierschenkels 26 an der Garraumwandung 11 halten.

Die Figuren 6 bis 10 zeigen ein weiteres Ausführungsbeispiel der Erfindung. In der Explosionsansicht nach Figur 6 ist die Anordnung 10 von Gargeräteleuchte (dargestellt ist lediglich der Lichtleitstab 14) und Garraumwandung 11 - auch lediglich ein Ausbruch - mit seinen wesentlichen Bestandteilen gezeigt. Die Garraumwandung 11 wie auch die Halteplatte 20 sind im Wesentlichen entsprechend der ersten Ausführungsform ausgebildet, so dass die dortigen Ausführungen auch für das zweite Ausführungsbeispiel gelten.

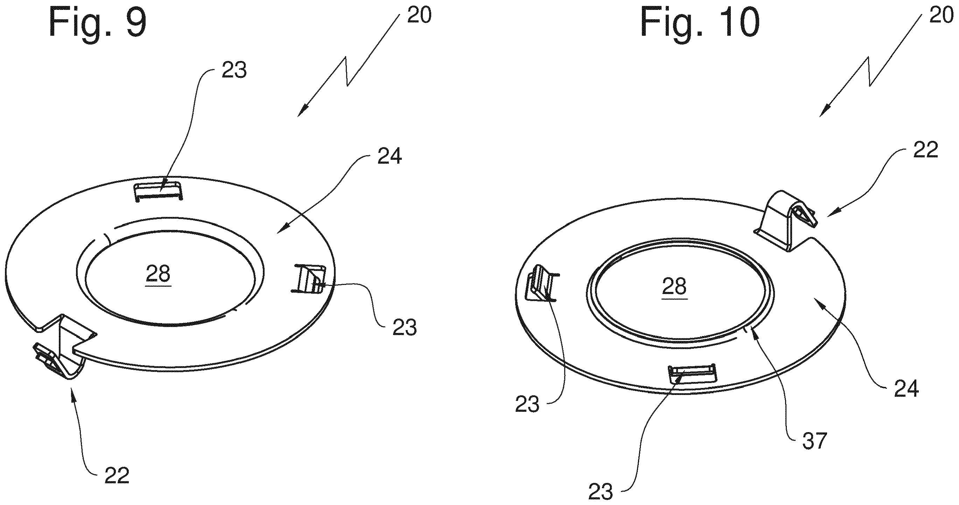

Insbesondere ist auch bei der zweiten Ausführungsform ein Durchbruch 12 in der Garraumwandung 11 vorzufinden, welcher eine Positionierungsnut 13 ausbildet. Die in den Figuren 9 und 10 in Perspektive von oben bzw. Perspektive von unten dargestellte Halteplatte 20 verfügt ebenfalls über eine Positioniernase 22, welche entsprechend der ersten Ausführungsform ausgebildet ist und über der ersten Ausführungsform entsprechende Haltefüße 23. Auch hier bildet die Ringwand 24 einen Ringraum 28 aus, jedoch wird hier auf eine Ausrichtkontur 29 verzichtet. Als weitere auffällige Abweichung vom ersten Ausführungsbeispiel ist ein von der Ringwand 24 ausgebildeter, gegenüber der Unterseite der Halteplatte 20 vorstehender Ringkragen 37.

Die zweite Ausführungsform der Erfindung umfasst gemäß Figur 6 darüber hinaus ein Dichtelement 38 mit einem zentralen Loch 39, welches als Aufnahme 40 für den Lichtleitstab 14 dient.

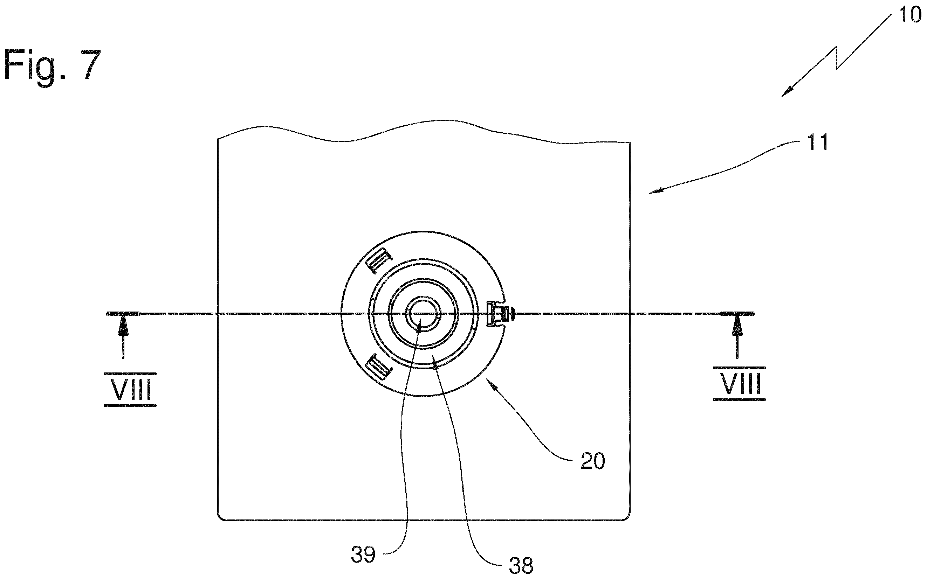

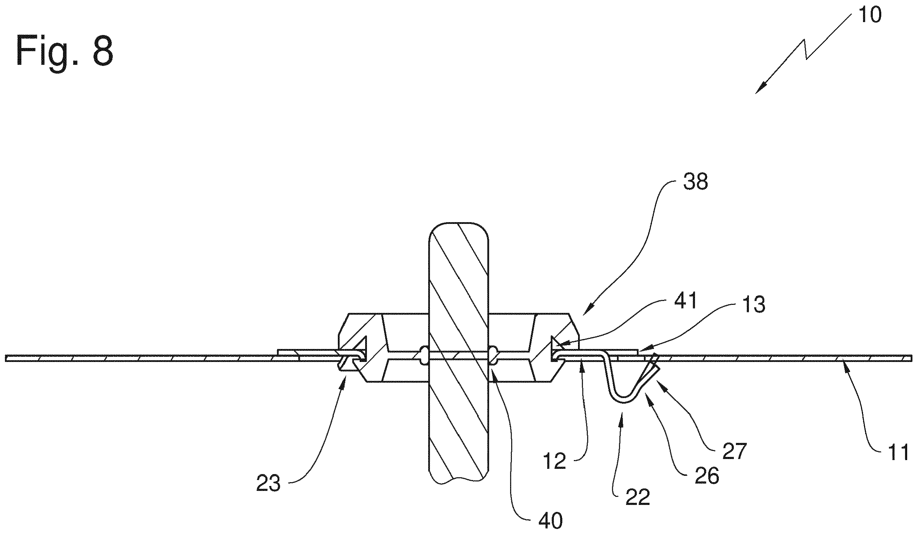

Figur 8, eine Schnittdarstellung gemäß Schnittlinie VIII-VIII in Figur 7, zeigt nunmehr die Anordnung der zweiten Ausführungsform gemäß Figur 6 in zusammengesetzter Form. Das Dichtelement 38 sitzt in dem Ringraum 28 der Halteplatte 20 ein. Eine vom Dichtelement 38 außenumfänglich ausgebildete und umlaufende Ringnut 41 nimmt den den Ringraum 28 begrenzenden Rand der Ringwand 24 auf, wobei der Ringkragen 37 in der Ringnut 41 aufgenommen ist.

Die das Dichtelement 38 aufnehmende Halteplatte 20 ist in dem Durchbruch 12 der Garraumwandung 11 eingesetzt, wobei die Haltefüße 23 die Garraumwandung 11 hintergreifen und so die Garraumwandung 11 zwischen sich und der auf der Garraumwandung 11 aufliegenden Ringwand 24 aufnehmen. Die Positioniernase 22 der Halteplatte 20 sitzt in der Positioniernut 13 des Durchbruchs 12 ein, wobei das freie Ende des Positionierschenkels 26 in der Ebene der Garraumwandung 11 einsitzt, wohingegen die Rastnase 27 die Garraumwandung 11 hintergreift und so die Halteplatte 20 im Durchbruch 12 verankert. Der Lichtleitstab 14 der ansonsten nicht weiter dargestellten Gargeräteleuchte sitzt in der Aufnahme 40 des Dichtelementes 38 ein und hält so die Gargeräteleuchte an der Garraumwandung 11, was weitere mögliche Befestigungselemente, insbesondere in dem dem freien Lichtstabende abgewandten Leuchtenbereich nicht ausschließt.

Beide Ausführungsformen zeigen, wie eine Garraumwandung 11 mit einem Durchbruch 12 zur Verankerung herkömmlicher Garraumleuchten mit beispielsweise Halogen- oder Glühwendellampen durch Nutzung einer adaptierenden Halteplatte 20 mit einer auf moderner LED-Technik basierenden Gargeräteleuchte versehen werden kann. Insbesondere Gargeräteleuchte mit Lichtleitstab 14 benötigen zum Einspeisen des Lichtes in den Garraum lediglich kleine Durchbrüche 12 in der Garraumwand. Die Halteplatte 20 vermindert den Durchmesser des Durchbruchs 12, gegebenenfalls unter zusätzlicher Nutzung von einem Befestigungssockel 15 oder einem Dichtelement 38 auf ein für die Einführung eines Lichtleitstabs 14 geeignetes Maß. Außerdem kann die Halteplatte 20 dazu dienen, die Gargeräteleuchte im Gargerät festzulegen, insbesondere wenn die Halteplatte 20 einen Befestigungssockel 15 aufnimmt. Bei der Halteplatte 20 handelt es sich folglich um eine Adapterplatte. Dank dieser ist es möglich, bestehende Formen und Werkzeuge weiter zu nutzen und dennoch LED-Leuchten zu verwenden, ohne dass Letztere in ihrer Bauart und Bauform an bestehende Gegebenheiten angepasst werden müssen.

Dabei ist es ein Kerngedanke der Erfindung, eine geeignete Zuführung für den Lichtleitstab 14 bereitzustellen, in dem ein überdimensioniert großer Durchbruch 12 der Garraumwandung 11 durch Nutzung insbesondere der Halteplatte 20 für die Durchführung des Lichtleitstabs 14 in seinen Abmessungen vermindert wird.

Soweit in der vorangegangenen Beschreibung kreisförmige Durchbrüche 12 gezeigt sind und auch eine kreisförmige Adapterplatte 20 offenbart ist, lässt sich der Kerngedanke der Erfindung auch bei ebenso vorkommenden, wenn auch weniger verbreiteten rechteckigen oder andersartig geformten Durchbrüchen verwenden, indem die Form der Adapterplatte 20 und gegebenenfalls die Form des Dichtelementes 38 bzw. des Befestigungssockels 15 anzupassen ist. Auch sind neben kreiszylindrischen Lichtleitstäben, solche mit rechteckigem, ovalem und unregelmäßigem Querschnitt bekannt. Durch eine entsprechende Anpassung lässt sich die Lehre der Erfindung auch auf solche Lichtleitstäbe übertragen.

### Bezugszeichenliste

- 10: Anordnung
- 11: Garraumwandung
- 12: Durchbruch
- 13: Positioniernut
- 14: Lichtleitstab
- 15: Befestigungssockel
- 16: Bohrung
- 17: Graphitring
- 18: Befestigungsspange
- 19: Haltestift
- 20: Halteplatte
- 21: dichtendes Elastikelement
- 22: Positioniernase
- 23: Haltefuß
- 24: Ringwand
- 25: Ursprungsschenkel
- 26: Positionierschenkel
- 27: Rastnase
- 28: Ringraum
- 29: Ausrichtkontur
- 30: Ausrichtmittel
- 31: Basisriegel
- 32: Durchtrittsöffnung
- 33: Haltestiftöffnung
- 34: Rastbein
- 35: Zentrier- und Rastabschnitt
- 36: Fixierfuß
- 37: Ringkragen
- 38: Dichtelement
- 39: Loch
- 40: Aufnahme
- 41: Ringnut
- 42: Hinterschnitt
- 43: Haltekammer
- 44: Dichtkragen
- 45: Dichtnut
- 46: Sackloch

## Patentansprüche

1. Gargerät,
- mit einem Garraum, der von einer Garraumwandung (11) umgeben ist,
- mit einem Durchbruch (12) in der Garraumwandung (11), die der Aufnahme einer Gargeräteleuchte dient,
- mit einer Gargeräteleuchte, die in dem Durchbruch (12) einsitzt und der Ausleuchtung des Garraumes dient, wobei
- eine Halteplatte (20) vorhanden ist,
- die Halteplatte (20) eine Aufnahmeöffnung für die Gargeräteleuchte aufweist,
- die Gargeräteleuchte in der Aufnahmeöffnung einsitzt,
- die Halteplatte (20) die Gargeräteleuchte in dem Durchbruch (12) verankert,
- die Halteplatte (20) mit der einsitzenden Gargeräteleuchte den Durchbruch (12) in der Garraumwand verschließt,
- die Gargeräteleuchte ein LED-Element als Leuchtmittel aufweist und mit einem Lichtleitstab (14) versehen ist, wobei
- der Lichtleitstab (14) in dem Durchbruch (12) der Garraumwandung (11) einsitzt, **dadurch gekennzeichnet, dass**
- die Gargeräteleuchte einen Befestigungssockel (15) aufweist, mittels dessen die Gargeräteleuchte in der Halteplatte (20) verankert ist, wobei ein Elastikelement (21) zwischen dem Befestigungssockel (15) und der Halteplatte (20) angeordnet ist, welches dichtend wirkt.

2. Gargerät nach Anspruch 1, **dadurch gekennzeichnet, dass** der Durchbruch (12) eine Positioniernut (13) in der Garraumwandung (11) ausbildet und die Halteplatte (20) eine Positioniernase (22) ausbildet, die in die Positioniernut (13) eingreift.

3. Gargerät nach Anspruch 1 oder 2, **dadurch gekennzeichnet, dass** die Halteplatte (20), insbesondere die Positioniernase (22) der Halteplatte (20), wenigstens eine die Garraumwandung (11) hintergreifende Rastnase (27) aufweist.

4. Gargerät nach einem der vorhergehenden Ansprüche, **dadurch gekennzeichnet, dass** die Halteplatte (20) wenigstens einen die Garraumwandung (11) hintergreifenden Haltefuß (23) aufweist.

5. Gargerät,
- mit einem Garraum, der von einer Garraumwandung (11) umgeben ist,
- mit einem Durchbruch (12) in der Garraumwandung (11), die der Aufnahme einer Gargeräteleuchte dient,
- mit einer Gargeräteleuchte, die in dem Durchbruch (12) einsitzt und der Ausleuchtung des Garraumes dient, wobei
- eine Halteplatte (20) vorhanden ist,
- die Halteplatte (20) eine Aufnahmeöffnung für die Gargeräteleuchte aufweist,
- die Gargeräteleuchte in der Aufnahmeöffnung einsitzt,
- die Halteplatte (20) die Gargeräteleuchte in dem Durchbruch (12) verankert,
- die Halteplatte (20) mit der einsitzenden Gargeräteleuchte den Durchbruch (12) in der Garraumwand verschließt,
- die Gargeräteleuchte ein LED-Element als Leuchtmittel aufweist und mit einem Lichtleitstab (14) versehen ist, wobei
- der Lichtleitstab (14) in dem Durchbruch (12) der Garraumwandung (11) einsitzt,
**dadurch gekennzeichnet, dass**
- der Durchbruch (12) eine Positioniernut (13) in der Garraumwandung (11) ausbildet und die Halteplatte (20) eine Positioniernase (22) ausbildet, die in die Positioniernut (13) eingreift,
- die Halteplatte (20), insbesondere die Positioniernase (22) der Halteplatte (20), wenigstens eine die Garraumwandung (11) hintergreifende Rastnase (27) aufweist, und, dass die Halteplatte (20) ein Dichtelement (38) mit einer Aufnahme (40) für den Lichtleitstab (14) der Gargeräteleuchte aufweist und dass,
- die Halteplatte (20) wenigstens einen die Garraumwandung (11) hintergreifenden Haltefuß (23) aufweist.

6. Gargerät nach einem der Ansprüche 1 bis 4, **dadurch gekennzeichnet, dass** die Halteplatte (20) eine Ausrichtkontur (29) für eine lagegerechte Halterung der Gargeräteleuchte in der Halteplatte (20) aufweist.

7. Gargerät nach einem der Ansprüche 4-6, **dadurch gekennzeichnet, dass** die Halteplatte (20) ein Stanz-/Biegeteil ist, bei welcher der Haltefuß (23) und die Positioniernase (22) aus dem Material der Halteplatte (20) ausgeklinkt ist.

8. Gargerät nach einem der vorhergehenden Ansprüche , **dadurch gekennzeichnet, dass** die Halteplatte (20) ringförmig ist und zwei Haltefüße (23) und eine Positioniernase (22) aufweist, wobei die Haltefüße (23) und die Positioniernase (22) jeweils um etwa 120 Grad umfangsversetzt sind.

## Claims

1. Cooking device
- having a cooking chamber surrounded by a cooking chamber wall (11),
- having an opening (12) in the cooking chamber wall (11) serving to receive a cooking device lamp,
- having a cooking device lamp installed in the opening (12) and serving to light the cooking chamber, wherein
- a holding plate (20) is present,
- the holding plate (20) has an intake opening for the cooking device lamp,
- the cooking device lamp is installed in the intake opening,
- the holding plate (20) anchors the cooking device lamp in the opening (12),
- the holding plate (20) with the installed cooking device lamp closes the opening (12) in the cooking chamber wall,
- the cooking device lamp has an LED element as a lighting means and is provided with a light guidance rod (14), wherein
- the light guidance rod (14) is installed in the opening (12) of the cooking chamber wall (11), **characterised in that**
- the cooking device lamp has a fixing pedestal (15), by means of which the cooking device lamp is anchored in the holding plate (20), wherein an elastic element (21) is arranged between the fixing pedestal (15) and the holding plate (20), which has a sealing effect.

2. Cooking device according to claim 1, **characterised in that** the opening (12) forms a positioning groove (13) in the cooking chamber wall (11) and the holding plate (20) forms a positioning lug (22) that engages in the positioning groove (13).

3. Cooking device according to claim 1 or 2, **characterised in that** the holding plate (20), particularly the positioning lug (22) of the holding plate (20), has at least one locking lug (27) engaging behind the cooking chamber wall (11).

4. Cooking device according to one of the preceding claims, **characterised in that** the holding plate (20) has at least one holding foot (23) engaging behind the cooking chamber wall (11).

5. Cooking device
- having a cooking chamber surrounded by a cooking chamber wall (11),
- having an opening (12) in the cooking chamber wall (11) serving to receive a cooking device lamp,
- having a cooking device lamp installed in the opening (12) and serving to light the cooking chamber, wherein
- a holding plate (20) is present,
- the holding plate (20) has an intake opening for the cooking device lamp,
- the cooking device lamp is installed in the intake opening,
- the holding plate (20) anchors the cooking device lamp in the opening (12),
- the holding plate (20) with the installed cooking device lamp closes the opening (12) in the cooking chamber wall,
- the cooking device lamp has an LED element as a lighting means and is provided with a light guidance rod (14), wherein
- the light guidance rod (14) is installed in the opening (12) of the cooking chamber wall (11),
**characterised in that**
- the opening (12) forms a positioning groove (13) in the cooking chamber wall (11), and the holding plate (20) forms a positioning lug (22) that engages in the positioning groove (13),
- the holding plate (20), particularly the positioning lug (22) of the holding plate (20), has at least one locking lug (27) engaging behind the cooking chamber wall (11), and **in that**
- the holding plate (20) has a seal element (38) having an intake (40) for the light guidance rod (14) of the cooking device lamp and **in that**
- the holding plate (20) has at least one holding foot (23) engaging behind the cooking chamber wall (11).

6. Cooking device according to one of claims 1 to 4, **characterised in that** the holding plate (20) has an alignment contour (29) for holding the cooking device lamp in the correct position in the holding plate (20).

7. Cooking device according to one of claims 4-6,
**characterised in that** the holding plate (20) is a stamped/bent part, wherein the holding foot (23) and the positioning lug (22) are notched out of the material of the holding plate (20).

8. Cooking device according to one of the preceding claims, **characterised in that** the holding plate (20) is ring-shaped and has two holding feet (23) and a positioning lug (22), wherein the holding feet (23) and the positioning lug (22) are respectively circumferentially offset by approximately 120 degrees.

## Revendications

1. Appareil de cuisson,
- comprenant une chambre de cuisson qui est entourée d'une paroi de chambre de cuisson (11),
- comportant une ouverture (12) dans la paroi de chambre de cuisson (11) qui est destinée à recevoir un élément d'éclairage d'appareil de cuisson,
- comprenant un élément d'éclairage d'appareil de cuisson qui est logé à l'intérieur de l'ouverture (12) et dont la fonction consiste à éclairer la chambre de cuisson, et
- comprenant une plaque de maintien (20),
- dans lequel la plaque de maintien (20) comporte une ouverture de réception qui est destinée à accueillir l'élément d'éclairage d'appareil de cuisson,
- dans lequel l'élément d'éclairage d'appareil de cuisson est placé à l'intérieur de l'ouverture de réception,
- dans lequel la plaque de maintien (20) bloque l'élément d'éclairage d'appareil de cuisson à l'intérieur de l'ouverture (12),
- dans lequel la plaque de maintien (20) ferme l'ouverture (12) dans la paroi de chambre de cuisson avec l'élément d'éclairage d'appareil de cuisson qui est inséré à l'intérieur de celle-ci,
- dans lequel l'élément d'éclairage d'appareil de cuisson comprend un élément de LED faisant office d'élément d'éclairage et est pourvu d'une tige de guidage de lumière (14), et
- dans lequel la tige de guidage de lumière (14) est insérée à l'intérieur de l'ouverture (12) de la paroi de chambre de cuisson (11),
**caractérisé en ce que** :
- l'élément d'éclairage d'appareil de cuisson comprend un socle de fixation (15) par l'intermédiaire duquel l'élément d'éclairage d'appareil de cuisson est ancré dans la plaque de maintien (20), un élément élastique (21) assurant l'étanchéité étant disposé entre le socle de fixation (15) et la plaque de maintien (20).

2. Appareil de cuisson selon la revendication 1, **caractérisé en ce que** l'ouverture (12) forme une rainure de positionnement (13) dans la paroi de chambre de cuisson (11) et la plaque de maintien (20) comporte un ergot de positionnement (22) qui s'engage à l'intérieur de la rainure de positionnement (13).

3. Appareil de cuisson selon la revendication 1 ou 2, **caractérisé en ce que** la plaque de maintien (20), en particulier l'ergot de positionnement (22) de la plaque de maintien (20), comprend au moins un ergot de verrouillage (27) qui s'engage derrière la paroi de chambre de cuisson (11).

4. Appareil de cuisson selon l'une quelconque des revendications précédentes, **caractérisé en ce que** la plaque de maintien (20) comprend au moins un pied de maintien (23) qui s'engage derrière la paroi de chambre de cuisson (11).

5. Appareil de cuisson,
- comprenant une chambre de cuisson qui est entourée par une paroi de chambre de cuisson (11),
- comportant une ouverture (12) dans la paroi de chambre de cuisson (11) qui est destinée à recevoir un élément d'éclairage d'appareil de cuisson,
- comprenant un élément d'éclairage d'appareil de cuisson qui est logé à l'intérieur de l'ouverture (12) et dont la fonction consiste à éclairer la chambre de cuisson, et
- comprenant une plaque de maintien (20),
- dans lequel la plaque de maintien (20) comporte une ouverture de réception qui est destinée à accueillir l'élément d'éclairage d'appareil de cuisson,
- dans lequel l'élément d'éclairage d'appareil de cuisson est placé à l'intérieur de l'ouverture de réception,
- dans lequel la plaque de maintien (20) bloque l'élément d'éclairage d'appareil de cuisson à l'intérieur de l'ouverture (12),
- dans lequel la plaque de maintien (20) ferme l'ouverture (12) dans la paroi de chambre de cuisson avec l'élément d'éclairage d'appareil de cuisson qui est inséré à l'intérieur de celle-ci,
- dans lequel l'élément d'éclairage d'appareil de cuisson comprend un élément de LED faisant office d'élément d'éclairage et est pourvu d'une tige de guidage de lumière (14), et
- dans lequel la tige de guidage de lumière (14) est insérée à l'intérieur de l'ouverture (12) de la paroi de chambre de cuisson (11),
**caractérisé en ce que** :
- l'ouverture (12) forme une rainure de positionnement (13) dans la paroi de chambre de cuisson (11) et la plaque de maintien (20) comporte un ergot de positionnement (22) qui s'engage à l'intérieur de la rainure de positionnement (13),
- la plaque de maintien (20), en particulier l'ergot de positionnement (22) de la plaque de maintien (20), comprend au moins un ergot de verrouillage (27) qui s'engage derrière la paroi de chambre de cuisson (11),
- la plaque de maintien (20) est pourvue d'un élément d'étanchéité (38) qui présente un logement (40) destiné à recevoir la tige de guidage de lumière (14) de l'élément d'éclairage d'appareil de cuisson, et
- la plaque de maintien (20) comprend au moins un pied de maintien (23) qui s'engage derrière la paroi de chambre de cuisson (11).

6. Appareil de cuisson selon l'une quelconque des revendications 1 à 4, **caractérisé en ce que** la plaque de maintien (20) présente un contour d'alignement (29) qui permet un maintien dans la position correcte de l'élément d'éclairage d'appareil de cuisson dans la plaque de maintien (20).

7. Appareil de cuisson selon l'une quelconque des revendications 4 à 6, **caractérisé en ce que** la plaque de maintien (20) est une pièce découpée / pliée, dans lequel le pied de maintien (23) et l'ergot de positionnement (22) sont découpés dans le matériau de la plaque de maintien (20).

8. Appareil de cuisson selon l'une quelconque des revendications précédentes, **caractérisé en ce que** la plaque de maintien (20) est annulaire et comprend deux pieds de maintien (23) et un ergot de positionnement (22), les pieds de maintien (23) et l'ergot de positionnement (22) étant chacun décalés d'environ 120 degrés de façon circonférentielle.
